Europäisches Patentamt

European Patent Office

Office européen des brevets

(11) Veröffentlichungsnummer: **0 406 847 B1**

(12) **EUROPÄISCHE PATENTSCHRIFT**

(45) Veröffentlichungstag der Patentschrift: **16.03.94**

(21) Anmeldenummer: **90112800.9**

(22) Anmeldetag: **04.07.90**

(51) Int. Cl.5: **C04B** 35/10, C09K 3/14, B24D 3/16

Die Akte enthält technische Angaben, die nach dem Eingang der Anmeldung eingereicht wurden und die nicht in dieser Patentschrift enthalten sind.

(54) **Sinterwerkstoff auf Basis von Aluminiumoxid, Verfahren zu seiner Herstellung und seine Verwendung.**

(30) Priorität: **07.07.89 CH 2537/89**

(43) Veröffentlichungstag der Anmeldung:
**09.01.91 Patentblatt 91/02**

(45) Bekanntmachung des Hinweises auf die Patenterteilung:
**16.03.94 Patentblatt 94/11**

(84) Benannte Vertragsstaaten:
**AT BE CH DE DK ES FR GB IT LI LU NL SE**

(56) Entgegenhaltungen:
**DE-A- 3 219 607
US-A- 4 314 827
US-A- 4 582 812**

(73) Patentinhaber: **LONZA AG
Gampel/Wallis
Geschäftsleitung Basel
CH-4002 Basel(CH)**

(72) Erfinder: **Kunz, Reiner, Dr., Dipl.-Chem.
Königsbergerstrasse 33
Waldshut-Tiengen(DE)**
Erfinder: **Kampfer, Konrad, Dipl.-Ing.
Neuhausweg 20
Thayngen (Kanton Schaffhausen)(CH)**

(74) Vertreter: **Weinhold, Peter, Dr. et al
Patentanwälte Dipl.-Ing. G. Dannenberg
Dr. P. Weinhold
Dr. D. Gudel
Dipl.-Ing. S. Schubert
Dr. P. Barz
Siegfriedstrasse 8
D-80803 München (DE)**

EP 0 406 847 B1

**Beschreibung**

Die Erfindung betrifft einen Sinterwerkstoff auf Aluminiumoxidbasis, ein Sol-Gel-Verfahren zu seiner Herstellung, sowie seine Verwendung als Schleifmittel, keramisches Pulver oder Formkörper.

Oxidische Schleifmittel wie Korund oder Zirkonkorund werden üblicherweise durch Schmelzen des Oxids bzw. der Oxidmischung, Erstarrenlassen der Schmelze, Zerkleinern und Klassieren hergestellt. Nachteile dieses Verfahrens sind der hohe Energieaufwand und die beschränkte Einflussmöglichkeit auf die mechanischen Eigenschaften des Produktes die im wesentlichen durch die Zusammensetzung und die Abkühlungsbedingungen festgelegt sind.

Es sind auch gesinterte Werkstoffe auf Aluminiumoxidbasis bekannt, die sich für eine Verwendung als Schleifmittel eignen. Die ersten dieser Sinterprodukte, wie sie beispielsweise in der US-A-2 278 442 beschrieben sind, wurden aus reinem Aluminiumoxid oder Aluminiumhydroxid oder aber aus Bauxit durch feines Mahlen, gegebenenfalls Zusatz von Sinterhilfsmitteln oder Glasphasenbildnern, Kompaktieren und Sintern oder Heisspressen hergestellt. Es zeigte sich jedoch, dass die so erhaltenen Materialien noch keine optimalen Schleifeigenschaften aufweisen, weil ihre Kristallitgrösse beispielsweise im Bereich von 5 bis 20 $\mu$m liegt, während zur Erreichung maximaler Härte und Zähigkeit wesentlich kleinere Kristallite notwendig sind. In der DE-A-36 04 848 wurde vorgeschlagen, Tonerde mit Zusätzen bis auf eine Teilchengrösse von weniger als 0;1 $\mu$m zu mahlen und dann einer mehrstufigen Wärme- und Sinterbehandlung zu unterwerfen. Das Verfahren geht zwar von preisgünstigen Rohstoffen aus, jedoch ist der Mahlvorgang sehr aufwendig und seine Durchführbarkeit im grossen Massstab zweifelhaft.

Das Problem der Zerkleinerung wird von den sogenannten Sol-Gel-Verfahren vermieden, die beispielsweise in der US-A-4314827 und in der DE-A-32 19 607 beschrieben sind. Die bisher bekannten Ausführungsformen des Sol-Gel-Verfahrens erfordern in der Regel den Zusatz von Magnesiumoxid oder einer Vorstufe davon oder einer anderen Verbindung eines spinellbildenden Metalls.

Eine weitere bekannte Möglichkeit ist die Zugabe von bis zu 60 Gew.% (gerechnet als $ZrO_2$ und bezogen auf das gesinterte Produkt) von Zirkonverbindungen. Die Zusätze werden dabei vorzugsweise in Form löslicher Salze oder Alkoholate eingebracht, was eine erhebliche Menge an organischer Substanz oder anorganischen Säurebestandteilen, wie Nitrat, in den gebildeten Solen und Gelen zur Folge hat. Diese Verbindungen müssen bei der Wärmebehandlung vor dem Sintern vollständig verflüchtigt bzw. zersetzt werden. Wünschenswert ist dagegen, die Zusätze in möglichst geringer Menge und womöglich als Oxid oder Hydroxid einzubringen, damit vor dem Sintern nur noch Wasser entfernt werden muss.

Weiterhin ist es wünschenswert, die Eigenschaften des Sinterproduktes, insbesondere seine Bruchzähigkeit und Härte, auf verhältnismässig einfache Weise, ohne Verwendung zahlreicher verschiedener Zusätze, beeinflussen zu können.

Aufgabe der Erfindung war daher, ein Verfahren zur Herstellung keramischer Materialien auf Aluminiumoxidbasis aufzuzeigen, das einfach durchzuführen ist und unter Verwendung verhältnismässig kleiner Mengen von vorzugsweise oxidischen Zusätzen Produkte liefert, die als Schleifmittel geeignet sind und in ihren mechanischen Eigenschaften einfach und reproduzierbar beeinflusst werden können.

Erfindungsgemäss wird diese Aufgabe durch ein Verfahren gemäss Patentanspruch 1 gelöst. Der erfindungsgemässe Werkstoff hat die im Anspruch 11 angegebener Merkmale.

Es wurde überraschend gefunden, dass durch einen Zusatz von Titanoxid oder Aluminiumtitanat in feinverteilter Form oder Gemischen der beiden Verbindungen oder von entsprechenden Vorstufen zu zu an sich bekannte Weise hergestellten Aluminiumoxid- bzw. Aluminiumhydroxidsolen auch ohne sonstige Zusätze nach der üblichen Arbeitsmethode dichte Körper von grosser Härte und Zähigkeit und mit sehr feinem Gefüge hergestellt werden können, sofern geeignete Sinterbedingungen eingehalten werden.

Zwar war bekannt (T.Woignier et al., J.Non-Cryst.Solids <u>100</u> (1988) 325-329), dass aus $Al_2O_3$ und $TiO_2$ ohne weitere Zusätze dichte Sinterkörper erhalten werden können, diese bestanden jedoch aus äquimolaren Mengen $Al_2O_3$ und $TiO_2$ bzw. aus $Al_2TiO_5$ und wurden nur durch Heisspressen dicht erhalten.

Das erfindungsgemäss zugesetzte Titandioxid hat zweckmässig eine mittlere Teilchengrösse, ausgedrückt als $d_{50}$-Wert, von weniger als 5 $\mu$m, vorzugsweise weniger als 1 $\mu$m. Besonders bevorzugt ist ein sogenanntes hochdisperses, durch Flammenhydrolyse von wasserfreiem Titantetrachlorid hergestelltes Produkt mit einer mittleren Primärteilchengrösse von 10 bis 50 nm. Ein solches Produkt ist beispielsweise von der Firma Degussa unter der Bezeichnung Titandioxid P25 erhältlich.

Eine weitere Ausführungsform des erfindungsgemässen Verfahrens verwendet feinstteiliges Aluminiumtitanat mit einer mittleren Teilchengrösse, ausgedrückt als $d_{50}$-Wert von weniger als 5 $\mu$m, vorzugsweise weniger als 1 $\mu$m. Besonders bevorzugt ist wiederum ein hochdisperses Produkt mit einer mittleren Primärteilchengrösse von 10 bis 50 nm.

Es ist auch möglich, andere Quellen von feinstverteiltem Titandioxid, wie beispielsweise hydrolysierte Tetraalkoxytitane, zu verwenden oder statt Aluminiumtitanat ein Gemisch aus Titandioxid und Aluminiumoxid einzusetzen.

Als Aluminiumoxid wird in diesem Fall vorzugsweise ein hochdisperses Aluminiumoxid mit einer mittleren Teilchengrösse von 5 bis 50 nm verwendet, das überwiegend aus der $\gamma$-Modifikation besteht. Solche hochdispersen Aluminiumoxide werden durch Flammenhydrolyse von wasserfreiem Aluminiumchlorid hergestellt und z.B. von der Fa. Degussa unter der Bezeichnung Aluminiumoxid C vertrieben.

Das Titandioxid oder die sonstigen titanhaltigen Zusätze werden dem Aluminiumoxid- bzw. Aluminiumhydroxidsol zweckmässig in einer solchen Menge zugegeben, dass der Titanoxidgehalt im fertigen Sinterprodukt 0,1 bis 10 Gew.% beträgt. Unter dem Titandioxidgehalt ist hier die elementaranalytische Zusammensetzung und nicht die Phasenzusammensetzung zu verstehen, d.h. es spielt keine Rolle, ob das Titan im fertigen Produkt als $TiO_2$ oder $Al_2TiO_5$ oder in einer anderen Form vorliegt. Vorzugsweise beträgt der $TiO_2$-Gehalt im fertigen Sinterprodukt 1 bis 5 Gew.%.

Das Titandioxid oder die sonstigen titanhaltigen Zusätze werden zweckmässig intensiv im Sol dispergiert, um eine möglichst homogene Verteilung zu erreichen. Dies kann durch Rühren mit einem Hochgeschwindigkeitsrührer oder beispielsweise durch die Behandlung in einer Kugelmühle oder Schwingmühle erreicht werden. Bei Solen mit hohem Feststoffgehalt wird die homogene Verteilung der Zusätze vorteilhaft mit Hilfe eines Druckmischers, Kneters, Extruders oder einer ähnlichen Vorrichtung erreicht.

Das Sol wird anschliessend in an sich bekannter Weise in ein Gel übergeführt und bei einer Temperatur von weniger als 100°C getrocknet.

Die Gelbildung erfolgt vorzugsweise durch langsamen Zusatz von Salpetersäure, Salzsäure oder Essigsäure. See wird vorzugsweise in flachen Schalen in einer Schichtdicke von wenigen Zentimetern durchgeführt.

Die Trocknung wird vorzugsweise in einem Trockenschrank vorgenommen und dauert beispielsweise bei 75°C einige Tage. Nach der Trocknung kann das Gel in an sich bekannter Weise zerkleinert und, sofern das Endprodukt als Schleifmittel verwendet werden soll, entsprechend der gewünschten Körnung klassiert werden, wobei zweckmässig das Schwinden während des Sinterprozesses berücksichtigt wird.

Der Sinterprozess wird zweckmässig mehrstufig durchgeführt. Zunächst wird das getrocknete Gel für wenigstens 1 Stunde auf eine Temperatur von 300 bis 700°C erhitzt, um physikalisch und chemisch gebundenes Wasser und sonstige, bei dieser Temperatur flüchtige Bestandteile zu entfernen und die Hydroxide und Oxidhydrate in die Oxide überzuführen. Anschliessend wird das so kalzinierte Material weiter bis zur Sintertemperatur erhitzt, wobei es gegebenenfalls von Vorteil sein kann, vor dem eigentlichen Sintern noch eine Haltezeit bei einer etwas unter der Sintertemperatur liegenden Temperatur von beispielsweise 1100°C einzuschalten. Die Sinterung erfolgt zweckmässig bei einer Temperatur von 1250 bis 1500°C, wobei je nach Temperatur eine Haltezeit von wenigen Minuten bis zu einigen Stunden erforderlich ist. Die optimale Haltezeit hängt auch wesentlich von den Aufheiz- und Abkühlgeschwindigkeiten ab und muss durch Versuche ermittelt werden, wie dies in der Keramik üblich und dem Fachmann geläufig ist. Das so erhältliche gesinterte Material besteht aus Kristalliten, von denen wenigstens 95% eine Grösse von weniger als 4 $\mu$m, vorzugsweise weniger als 2 $\mu$m, aufweisen. Es ist von zahlreichen Mikroporen durchsetzt, die überwiegend eine Grösse von 10 bis 500 nm aufweisen und nicht untereinander verbunden sind. Diese Mikroporen befinden sich teils zwischen den Kristalliten, teils in den einzelnen Kristalliten. Ihre Anzahl kann anhand von rasterelektronenmikroskopischen (REM) Aufnahmen an Bruchflächen abgeschätzt werden. Im allgemeinen weist das Material pro Kristallit wenigstens eine Pore auf.

Die Bruchzähigkeit $K_{Ic}$ dieses Materials ist aufgrund der zahlreichen Mikroporen hoch und beträgt vorzugsweise wenigstens 4,5 $MPa.m^{\frac{1}{2}}$, die Mikrohärte beträgt vorzugsweise wenigstens 16 GPa.

Im Röntgenbeugungsdiagramm dieses Materials ist bei $TiO_2$-Gehalten ab ca. 2 Gew.% das Vorhandensein einer Rutil-Phase zu erkennen.

Durch eine Wärmebehandlung nach dem Sintern bei einer Temperatur, die unterhalb der Sintertemperatur liegt, vorzugsweise etwa 100°C tiefer, und vorzugsweise 1 bis 8 Stunden andauert, kann die Zahl der Mikroporen stark reduziert werden, es ist sogar möglich, diese weitgehend zum Verschwinden zu bringen. Die Kristallitgrösse steigt bei diesem Vorgang an, wobei es jedoch ohne weiteres möglich ist, ein Produkt mit einer mittleren Kristallitgrösse von beispielsweise 2 $\mu$m zu erhalten, bei dem wenigstens 95% der Kristallite kleiner als 4 $\mu$m sind und das im wesentlichen frei von Mikroporen ist. Durch die zusätzliche Wärmebehandlung steigt die Mikrohärte auf vorzugsweise wenigstens 18 GPa, während die Bruchzähigkeit auf Werte von 2 bis 2,5 $MPa.m^{\frac{1}{2}}$ zurückgeht.

Nach der Wärmebehandlung sind im Röntgenbeugungsdiagramm keine Beugungslinien von Rutil mehr erkennbar.

Unabhängig von den Mikroporen weisen die erfindungsgemäss hergestellten Sinterprodukte noch geschlossene grössere Poren auf. Die durch Pyknometrie bestimmbaren Dichten werden daher durch den Zerkleinerungsgrad der Proben beeinflusst. Für die bevorzugten Anwendungen als Schleifmittel oder zur

EP 0 406 847 B1

Herstellung von keramischen Pulvern bedeutet dies jedoch keinen wesentlichen Nachteil.

Die erfindungsgemässen Sinterwerkstoffe werden vorzugsweise als Schleifmittel verwendet, und zwar sowohl in loser Form, je nach Körnung beispielsweise als Strahl- oder Läppkorn, als auch als Schleifmittel auf Unterlage wie in Schleifpapieren oder -geweben oder in keramisch gebundenen oder kunstharzgebundenen Schleifkörpern wie Schleif-, Trenn- oder Schruppscheiben.

Eine weitere bevorzugte Verwendung der erfindungsgemässen Sinterwerkstoffe ist die Herstellung von keramischen Pulvern, die auf an sich bekannte Weise zu keramischen Bauteilen weiterverarbeitet oder als keramische Plasmaspritzpulver eingesetzt werden.

Weitere bevorzugte Verwendungen der erfindungsgemässen Sinterwerkstoffe sind die Herstellung von keramischen Schneidwerkzeugen für die spanabhebende Bearbeitung, insbesondere von Metallen, sowie die Herstellung von Mahlkörpern, beispielsweise für Kugelmühlen.

Die nachfolgenden Beispiele verdeutlichen die Ausführung der Erfindung.

Beispiele 1 - 9

Allgemeine Vorschrift:

In einem Rührbehälter wurden 20 l entsalztes Wasser (≤5 μS) vorgelegt und 5 kg Pural$^R$ SB (Condea Chemie GmbH) mittels eines Propellerrührers (n = 1000 min$^{-1}$) eingerührt. Anschliessend wurde die entsprechende Menge hochdisperses Titandioxid P25 (Degussa AG) zugegeben und die so erhaltene niedrigviskose Mischung mindestens 24 Stunden intensiv dispergiert. Danach wurde durch Zugabe von ca. 0,75 l konzentrierter Essigsäure der pH auf 3,5 eingestellt und die Mischung in einer Schichtdicke von 2 bis 3 cm in flache Blechschalen eingegossen. Bei Raumtemperatur bildete sich innerhalb von 45 bis 60 Minuten ein stichfestes Gel, das bei 75°C innerhalb von 2 bis 3 Tagen im Trockenschrank getrocknet wurde.

Das getrocknete Gel wurde in groben Stücken in einem Schnellbrandofen unter verschiedenen Bedingungen gesintert.

Die Charakterisierung des gesinterten Produktes erfolgte durch Bestimmung folgender Eigenschaften:

a)  Dichte, pyknometrisch in Xylol an zerkleinerten Proben der Körnung 0 bis 0,5 mm

b)  Mikrohärte nach Vickers (Eindruckkraft 1 N)  )
                                                 ) an polier-
c)  Makrohärte nach Vickers (Eindruckkraft 100 N))
                                                 ) ten Flächen
d)  Bruchzähigkeit $K_{IC}$ nach Anstis und Niihara  )

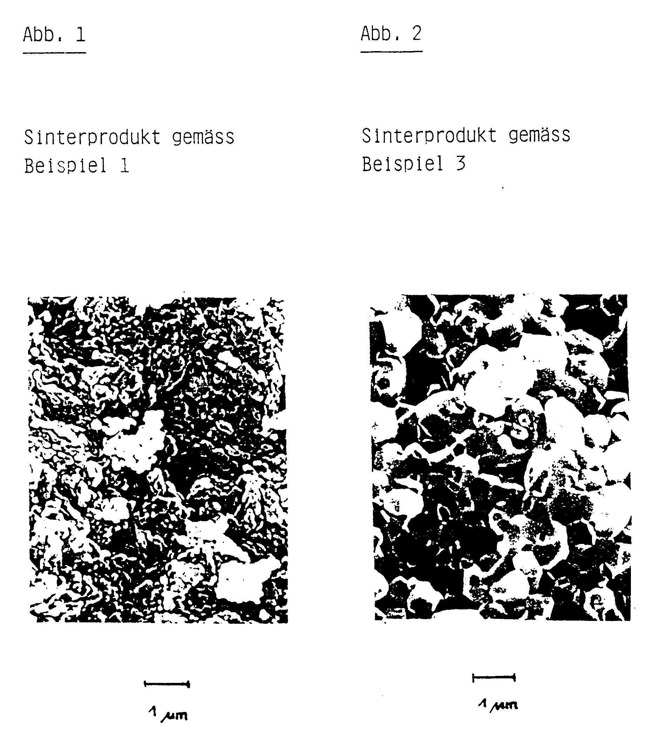

e)  Kristallit- und Porengrösse durch REM-Aufnahmen an Bruch-
    flächen (Abb. 1-7)

Sinterbedingungen und Ergebnisse:

Beispiele 1-3:

Die Zugabemenge an Titandioxid P25 betrug 0,1 Gew.% (Beispiel 1), 1 Gew.% (Beispiel 2) und 2 Gew.% (Beispiel 3), jeweils bezogen auf das eingesetzte Pural$^R$.

Das getrocknete Gel wurde innerhalb von 1 Stunde auf 400°C erhitzt, bei dieser Temperatur 1 Stunde gehalten, dann innerhalb von 30 Minuten auf 1100°C erhitzt, bei dieser Temperatur 3 Stunden gehalten, innerhalb von 30 Minuten auf die Endtemperatur von 1300°C erhitzt, bei dieser Temperatur 15 Minuten gehalten und schliesslich abgekühlt.

Die Eigenschaften der so erhaltenen Materialien sind in Tabelle 1 zusammengestellt.

4

Tabelle 1

| Zugabemenge an TiO2 [Gew.%] bezogen auf Pural[R] SB | 0,1 | 1 | 2 |
|---|---|---|---|
| Dichte [g/cm3] | 3,4 | 3,61 | 3,69 |
| Mikrohärte [GPa] | 4,5 | 17,9 | 18,4 |
| Makrohärte [GPa] | n.b. | 15,1 | 15,7 |
| $K_{IC}$ [MPa•m$^{\frac{1}{2}}$] | n.b. | 4,6 | 5,1 |
| mittl.Kristallitgrösse [$\mu$m] | wurmartig d = 0,4 | 0,7 | 0,7 |

(n.b. = nicht bestimmt)

REM-Aufnahmen von Bruchflächen der Produkte nach Beispielen 1 und 3 (Abb. 1-2) veranschaulichen die Struktur der gesinterten Materialien.

Beispiele 4-6:

Die Zugabemenge an Titandioxid P25 betrug 2 Gew.% (Beispiel 4), 3,5 Gew.% (Beispiel 5) und 5 Gew.% (Beispiel 6), jeweils bezogen auf das eingesetzte Pural[R].
Das getrocknete Gel wurde innerhalb von 1 Stunde auf 400°C erhitzt und bei dieser Temperatur 1 Stunde gehalten. Anschliessend wurde innerhalb von 30 Minuten auf 1330°C erhitzt, bei dieser Temperatur 5 Minuten gehalten und abgekühlt.
Die Eigenschaften der so erhaltenen Materialien sind in Tabelle 2 zusammengestellt.

Tabelle 2

| Zugabemenge an TiO2 [Gew.%] bezogen auf Pural[R] SB | 2 | 3,5 | 5 |
|---|---|---|---|
| Dichte [g/cm3] | 3,65 | 3,85 | 3,79 |
| Mikrohärte [GPa] | 18,0 | 19,0 | 18,5 |
| Makrohärte [GPa] | 16,5 | 15,0 | 16,5 |
| $K_{IC}$ [MPa•m$^{\frac{1}{2}}$] | 5,7 | 4,9 | 5,2 |
| mittl.Kristallitgrösse [$\mu$m] | 1,0 | 1,0 | 1,5 |
| mittl.Mikroporengrösse [$\mu$m] | 0,15 | 0,15 | 0,15 |

Beispiele 7-9:

Die Zugabemenge an Titandioxid P25 betrug 2 Gew.% (Beispiel 7), 3,5 Gew.% (Beispiel 8) und 5 Gew.% (Beispiel 9), jeweils bezogen auf das eingesetzte Pural[R].
Es wurde wie bei den Beispielen 4-6 verfahren, jedoch nach der Haltezeit von 5 Minuten bei 1330°C nicht sofort auf Raumtemperatur abgekühlt, sondern noch 5 Stunden bei 1250°C gehalten. Die Mikroporen im Sinterprodukt verschwanden dabei weitgehend, die übrigen Eigenschaften der so erhaltenen Materialien sind in Tabelle 3 zusammengefasst.

Tabelle 3

| Zugabemenge an TiO2 [Gew.%] bezogenauf Pural[R] SB | 2 | 3,5 | 5 |
|---|---|---|---|
| Dichte [g/cm3] | 3,66 | 3,84 | 3,80 |
| Mikrohärte [GPa] | 19,6 | 20,0 | 19,4 |
| Makrohärte [GPa] | 16,4 | 15,2 | 16,5 |
| $K_{IC}$ [MPa•m$^{\frac{1}{2}}$] | 2,1 | 2,0 | 2,5 |
| mittl.Kristallitgrösse [$\mu$m] | 2,0 | 2,0 | 2,0 |
| mittl.Mikroporengrösse [$\mu$m] | keine | keine | keine |

Beispiele 10 - 11

Die Gelherstellung erfolgte wie bei den Beispielen 1-9 beschrieben, anstelle des hochdispersen Titandioxids wurde jedoch eine äquimolare Mischung aus hochdispersem Aluminiumoxid C (Degussa AG) und Titandioxid P 25 (Degussa AG), entsprechend einer Zusammensetzung von 56 Gew.% $Al_2O_3$ und 44 Gew.% $TiO_2$ eingesetzt. Die Gesamtmenge dieser Additivmischung betrug 2 Gew.%, bezogen auf die Einwaage an Pural[R] SB.

Sinterbedingungen und Ergebnisse:

Beispiel 10:

Das getrocknete Gel wurde innerhalb von 1 Stunde auf 400°C erhitzt, 1 Stunde bei dieser Temperatur gehalten, innerhalb von 10 Minuten auf 730°C erhitzt und 30 Minuten auf dieser Temperatur gehalten. Innerhalb von 30 Minuten wurde die Temperatur auf 1100°C gesteigert und 1 Stunde auf diesem Wert gehalten, daraufhin wurde innerhalb von 30 Minuten die Endtemperatur von 1310°C erreicht und noch 10 Minuten gehalten und schliesslich auf Raumtemperatur abgekühlt.

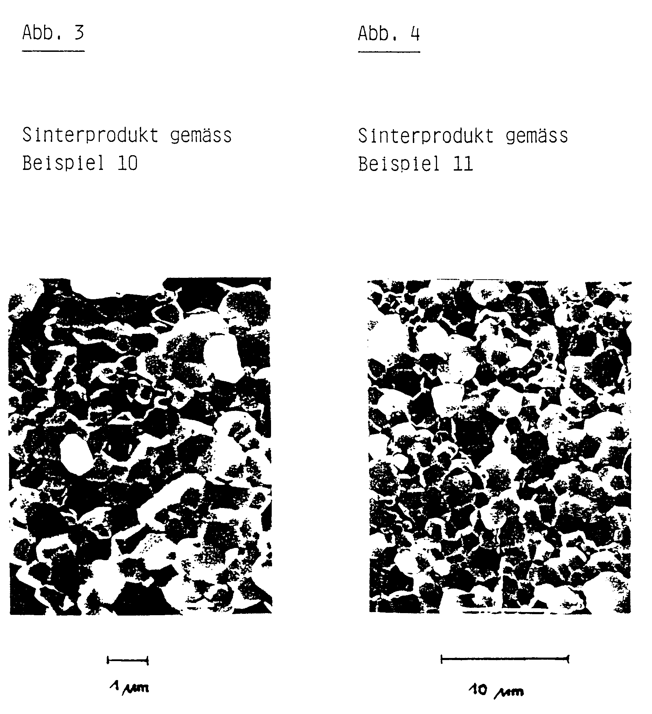

Die Eigenschaften des so erhaltenen Produktes sind in Tabelle 4 zusammengefasst, Abb.3 zeigt eine REM-Aufnahme einer Bruchfläche.

Tabelle 4

| | |
|---|---|
| Dichte [g/cm3] | 3,66 |
| Mikrohärte [GPa] | 19,0 |
| Makrohärte [GPa] | 15,2 |
| $K_{IC}$ [MPa•m$^{\frac{1}{2}}$] | 5,1 |
| mittl.Kristallitgrösse [$\mu$m] | 0,7 |
| mittl.Mikroporengrösse [$\mu$m] | 0,15 |

Beispiel 11:

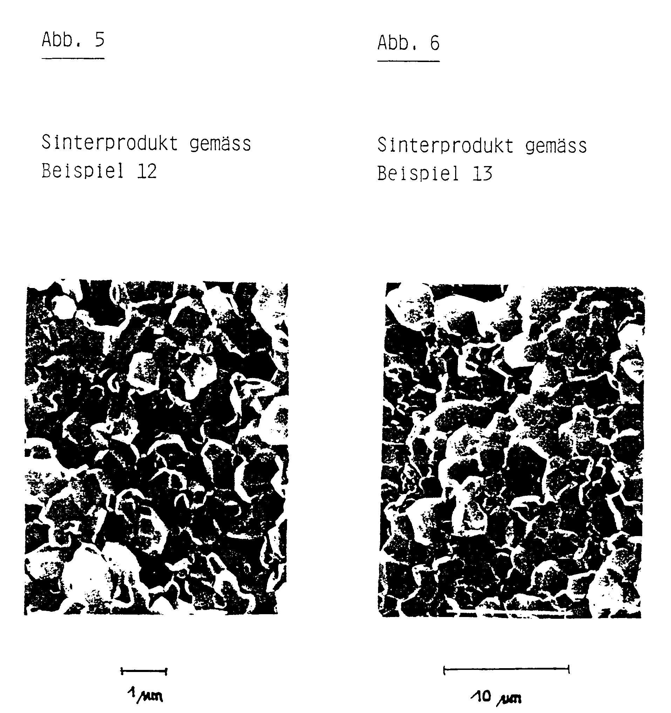

Die Temperaturführung erfolgte wie in Beispiel 10 beschrieben, jedoch wurde das Material vor dem Abkühlen noch 5 Stunden auf einer Temperatur von 1250°C gehalten. Die Mikroporen verschwanden bei dieser Nachbehandlung weitgehend, die übrigen Eigenschaften des so erhaltenen Materials finden sich in Tabelle 5. Eine REM-Aufnahme einer Bruchfläche des Materials ist in Abb.4 dargestellt.

Tabelle 5

| | |
|---|---|
| Dichte [g/cm3] | 3,66 |
| Mikrohärte [GPa] | 20,2 |
| Makrohärte [GPa] | 15,4 |
| $K_{IC}$ [MPa•m$^{\frac{1}{2}}$] | 2,4 |
| mittl.Kristallitgrösse [$\mu$m] | 2,5 |
| mittl.Mikroporengrösse [$\mu$m] | keine Mikroporen |

Beispiele 12 - 13

Die Gelherstellung erfolgte wie in den Beispielen 10-11 beschrieben, anstelle des Dispergierens des Sols mit einem Rührer wurde eine Feinstmahlung in einer Schwingmühle mit Aluminiumoxidkugeln (≧97% $Al_2O_3$, d ≃ 1,5-2 cm) durchgeführt. Die Mahldauer betrug 30 Minuten, das Gewichtsverhältnis der Mahlkugeln zum eingesetzten Pural[R] ca. 10:1.

Die Sinterbedingungen waren dieselben wie bei den Beispielen 10 und 11.

Die Eigenschaften der so erhaltenen Produkte sind in Tabelle 6 zusammengestellt, die Abb.5 und 6 zeigen REM-Aufnahmen von Bruchflächen.

Tabelle 6

|  | ohne Nachbehandlung bei 1250 °C | mit Nachbehandlung bei 1250 °C |
|---|---|---|
| Dichte [g/cm3] | 3,7 | 3,7 |
| Mikrohärte [GPa] | 19,2 | 20,7 |
| Makrohärte [GPa] | 16,0 | 16,1 |
| $K_{IC}$ [MPa•m$^{\frac{1}{2}}$] | 4,9 | 2,2 |
| mittl.Kristallitgrösse [$\mu$m] | 0,9 | 2,5 |
| mittl.Mikroporengrösse [$\mu$m] | 0,15 | keine |

## Beispiele 14 - 15

Die Gelherstellung erfolgte wie in den Beispielen 1-9, anstelle des hochdispersen Titandioxids wurden 2 Gew.% (bezogen auf die Einsatzmenge Pural[R]) Aluminiumtitanatpulver (H.C. Starck, Korngrösse 0-10 $\mu$m, $d_{50}$ = 4,5 $\mu$m) verwendet. Das getrocknete Gel wurde innerhalb von 1 Stunde auf 400 °C erhitzt, 1 Stunde auf dieser Temperatur gehalten, dann innerhalb von 30 Minuten auf 1450 °C erhitzt, 10 Minuten auf dieser Temperatur gehalten und schliesslich sofort (Beispiel 14) bzw. nach 5 Stunden bei 1250 °C (Beispiel 15) auf Raumtemperatur abgekühlt.

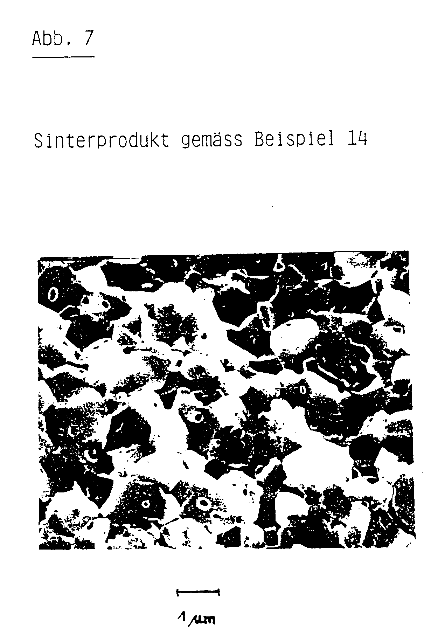

Die Eigenschaften der so erhaltenen Produkte sind in Tabelle 7 zusammengefasst. Eine REM-Aufnahme einer Bruchfläche des Produktes von Beispiel 14 ist in Abb.7 dargestellt.

Tabelle 7

|  | ohne Nachbehandlung bei 1250 °C | mit Nachbehandlung bei 1250 °C |
|---|---|---|
| Dichte [g/cm3] | 3,76 | 3,75 |
| Mikrohärte [GPa] | 19,1 | 20,0 |
| Makrohärte [GPa] | 15,0 | 15,0 |
| $K_{IC}$ [MPa•m$^{\frac{1}{2}}$] | 6,1 | 2,4 |
| mittl.Kristallitgrösse [$\mu$m] | 2,0 | 3,0 |
| mittl.Mikroporengrosse [$\mu$m] | 0,2 | keine |

## Beispiele 16-19:

Allgemeine Vorschrift:

In einem Rührgefäss wurden 400 ml verdünnte Salzsäure (0,74 Gew.%) vorgelegt, 100 g Disperal[R] und gegebenenfalls die Additive zugegeben und ca. 50 Minuten intensiv gerührt. Die Gelbildung erfolgte nach ca. 2 Stunden bei Raumtemperatur.

Das Gel wurde bei 80 °C innerhalb von ca. 72 Stunden getrocknet und anschliessend noch ca. 4 Stunden -im Trockenschrank auf 200 °C erhitzt.

Das getrocknete Gel wurde innerhalb von 1 Stunde auf 400 °C erhitzt, bei dieser Temperatur 1 Stunde gehalten, dann innerhalb von 1 Stunde auf 700 °C erhitzt und 30 Minuten bei dieser Temperatur gehalten und schliesslich innerhalb von 1 Stunde auf 1350 °C erhitzt, 15 Minuten auf dieser Temperatur gehalten und abgekühlt.

Beispiel 16     (Vergleichsbeispiel): Disperal[R] ohne Zusätze
Beispiel 17:     Disperal[R] mit 2 Gew.% Titandioxid P25
Beispiel 18:     Disperal[R] mit 1,12 Gew.% Aluminiumoxid-C und 0,88 Gew.% Titandioxid P25
Beispiel 19:     Disperal[R] mit 2 Gew.% Aluminiumtitanat (H.C.Starck)

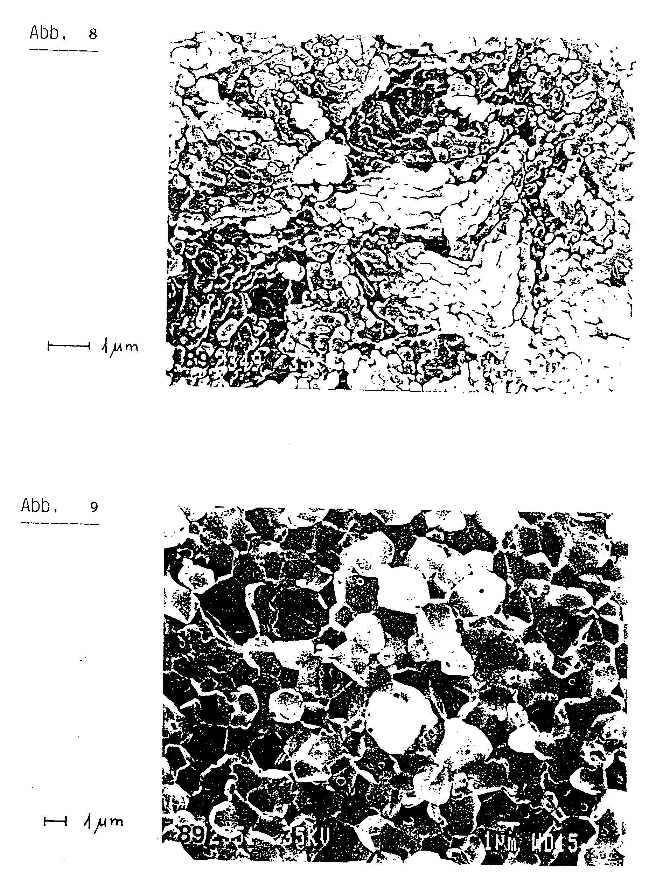

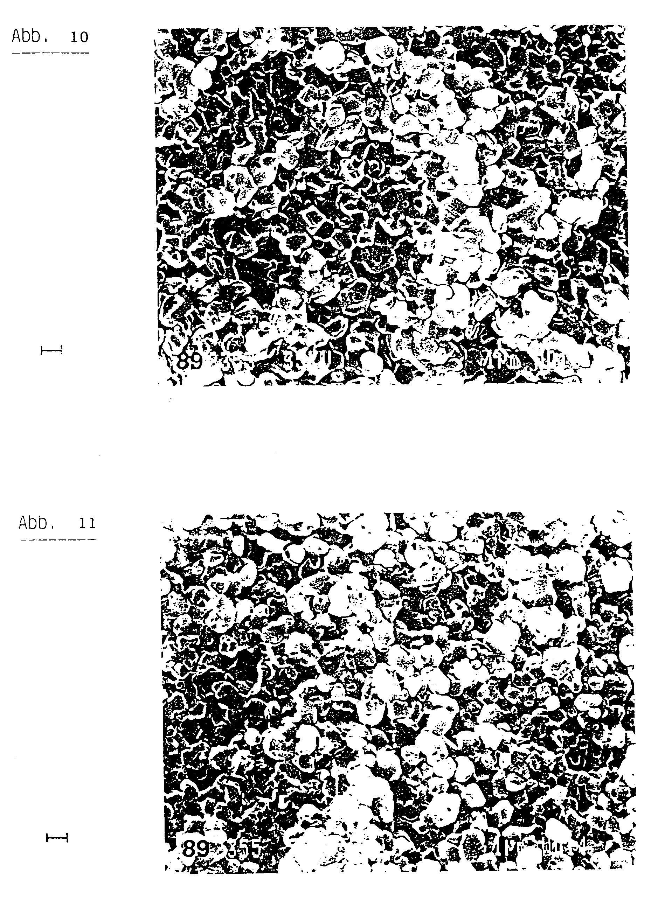

Die Eigenschaften der so erhaltenen Sinterprodukte sind in Tabelle 8 zusammengefasst. Rasterelektronenmikroskopische Aufnahmen von Bruchflächen zeigen die Abb.8 (Beispiel 16), Abb.9 (Beispiel 17), Abb.10 (Beispiel 18) und Abb.11 (Beispiel 19).

| Tabelle 8 | 16 | 17 | 18 | 19 |
|---|---|---|---|---|
| Dichte [g/cm3] | 3,75 | 3,81 | 3,69 | 3,69 |
| Mikrohärte [GPa] | n.b.(porös) | 19,2 | 18,7 | 20,2 |
| Makrohärte [GPa] | " | 15,7 | 15,0 | 15,0 |
| $K_{IC}$ [MPa·m$^{\frac{1}{2}}$] | " | 4,7 | 4,8 | 4,2 |
| mittl.Kristallitgrösse [μm] | ≃ 1 | 2,5 | 1 | 1 |
| | wurmartig | | | |
| mittl.Mikroporengrösse [μm] | – | 0,25 | 0,2 | 0,2 |

**Patentansprüche**

1. Verfahren zur Herstellung von gesinterten keramischen Werkstoffen auf Basis von α-Aluminiumoxid, das die Schritte Solherstellung, Gelbildung, Trocknung, gegebenenfalls Zerkleinerung und Klassierung, sowie Sintern beinhaltet, dadurch gekennzeichnet, dass ein homogenes Sol aus 90 bis 99,9 Gew.%, gerechnet als Al$_2$O$_3$ und bezogen auf das gesinterte Produkt, eines Tonerdehydrats und/oder wenigstens einer Vorstufe von α-Aluminiumoxid unter Zusatz von insgesamt 0,1 bis 10 Gew.%, gerechnet als TiO$_2$ und bezogen auf das gesinterte Produkt,
   a) von feinstteiligem oder hochdispersem Titandioxid und/oder
   b) feinstteiligem oder hochdispersem Aluminiumtitanat und/oder
   c) einem Gemisch aus feinstteiligem oder hochdispersem Titandioxid und feinstteiligem oder hochdispersem Aluminiumoxid und/oder
   d) wenigstens einer Titandioxid und/oder Aluminiumtitanat bildenden Vorstufe
   hergestellt wird und dass das Sintern nach einer Vorheizphase bei 300 bis 700°C bei einer Temperatur von 1250 bis 1500°C durchgeführt wird.

2. Verfahren nach Patentanspruch 1, dadurch gekennzeichnet, dass das Produkt nach dem Sintern so lange bei einer Temperatur von 800 bis 1300°C, jedoch wenigstens 20°C unterhalb der Sintertemperatur, nachbehandelt wird, bis wenigstens ein Teil der nach dem Sintern vorhandenen Mikroporen verschwunden ist.

3. Verfahren nach Patentanspruch 1 oder 2, dadurch gekennzeichnet, dass das Sintern bei Atmosphärendruck durchgeführt wird.

4. Verfahren nach einem oder mehreren der Patentansprüche 1 bis 3, dadurch gekennzeichnet, dass das Sol unter Zusatz von 0,1 bis 10 Gew.%, bezogen auf das gesinterte Produkt, Titandioxid einer Teilchengrösse von weniger als 5 μm im d$_{50}$-Wert hergestellt wird.

5. Verfahren nach Patentanspruch 4, dadurch gekennzeichnet, dass das Titandioxid in hochdisperser Form mit einer mittleren Primärteilchengrösse von 10 bis 50 nm eingesetzt wird.

6. Verfahren nach Patentanspruch 4 oder 5, dadurch gekennzeichnet, dass das Titandioxid im Gemisch mit Aluminiumoxid einer Teilchengrösse von weniger als 5 μm im d$_{50}$-Wert eingesetzt wird.

7. Verfahren nach Patentanspruch 6, dadurch gekennzeichnet, dass das Titandioxid im Gemisch mit hochdispersem Aluminiumoxid einer mittleren Primärteilchengrösse von 10 bis 50 nm eingesetzt wird.

8. Verfahren nach einem oder mehreren der Patentansprüche 1 bis 3, dadurch gekennzeichnet, dass das Sol unter Zusatz von 0,1 bis 10 Gew.%, gerechnet als TiO$_2$ und bezogen auf das gesinterte Produkt, Aluminiumtitanat einer Teilchengrösse von weniger also 5 μm im d$_{50}$-Wert hergestellt wird.

**9.** Verfahren nach Patentanspruch 8, dadurch gekennzeichnet, dass das Aluminiumtitanat in hochdisperser Form mit einer mittleren Primärteilchengrösse von 10 bis 50 nm eingesetzt wird.

**10.** Verfahren nach einem oder mehreren der Patentansprüche 1 bis 9, dadurch gekennzeichnet, dass als Tonerdehydrat bzw. Vorstufe von $\alpha$-Al$_2$O$_3$ feinstteiliger Böhmit oder Aluminiumhydroxid verwendet wird.

**11.** Sinterwerkstoff auf Basis von $\alpha$-Aluminiumoxid, dadurch gekennzeichnet, dass er aus 90 bis 99,9 Gew.% Al$_2$O$_3$ und 0,1 bis 10 Gew.% TiO$_2$ , welches gegebenenfalls in Form von Aluminiumtitanat vorliegt, besteht und eine Kristallgrösse von wenigstens 95% aller Kristallite von weniger als 4 $\mu$m aufweist.

**12.** Sinterwerkstoff nach Patentanspruch 11, dadurch gekennzeichnet, dass er aus 95 bis 99,0 Gew.% Al$_2$O$_3$ und 1 bis 5 Gew.% TiO$_2$, welches gegebenenfalls in Form von Aluminiumtitanat vorliegt, besteht.

**13.** Sinterwerkstoff nach Patentanspruch 11 oder 12, gekennzeichnet durch eine Mikrohärte von wenigstens 18 GPa und eine Bruchzähigkeit von wenigstens 2 MPa•m$^{\frac{1}{2}}$.

**14.** Sinterwerkstoff nach Patentanspruch 11 oder 12, gekennzeichnet durch eine Kristallitgrösse von wenigstens 95% aller Kristallite von weniger als 2 $\mu$m und Mikroporen mit einem Durchmesser von 10 bis 500 nm.

**15.** Sinterwerkstoff nach Patentanspruch 14, gekennzeichnet durch eine Mikrohärte von wenigstens 16 GPa und eine Bruchzähigkeit von wenigstens 4,5 MPa•m$^{\frac{1}{2}}$.

**16.** Verwendung des Sinterwerkstoffes nach Patentanspruch 11 als loses Schleifmittel.

**17.** Verwendung des Sinterwerkstoffes nach Patentanspruch 11 zur Herstellung von gebundenen Schleifmitteln, keramischen Pulvern, keramischen Bauteilen, Werkzeugen für spanabhebende Bearbeitung oder von Mahlkörpern.

**Claims**

**1.** A process for the preparation of sintered ceramic materials on the basis of $\alpha$-aluminum oxide comprising the steps of sol preparation, gel formation, drying, optionally comminution and classification as well as sintering, characterized in that a homogeneous sol of 90 to 99.9% by weight, calculated as Al$_2$O$_3$ and based on the sintered product, of a hydrate of alumina and/ or at least of a preliminary stage of $\alpha$-aluminum oxide is prepared by adding a total of 0.1 to 10% by weight, calculated as TiO$_2$ and based on the sintered product, of
   a. finely ground or highly dispersed titanium dioxide and/ or
   b. finely ground or highly dispersed aluminum titanate and/ or
   c. a mixture of finely ground or highly dispersed titanium dioxide and/ or finely ground or highly dispersed aluminum oxide and/ or
   d. at least a preliminary stage of titanium dioxide and/ or aluminum titanate
   and that the sintering is carried out after a pre-heating phase at 300 to 700 °C at a temperature of 1250 to 1500 °C.

**2.** A process according to claim 1, characterized in that after the sintering the product is post-treated at a temperature of 800 to 1300 °C, but at least 20 °C below the sintering temperature, until at least part of the micropores present after the sintering have disappeared.

**3.** A process according to claim 1 or 2, characterized in that the sintering is carried out at atmospheric pressure.

**4.** A process according to one or more of the claims 1 to 3, characterized in that the sol is prepared by adding 0.1 to 10% by weight, based on the sintered product, of titanium dioxide with a particle size d$_{50}$ of less than 5 $\mu$m.

**5.** A process according to claim 4, characterized in that the titanium dioxide is employed in highly dispersed form with an average primary particle size of 10 to 50 nm.

**6.** A process according to claim 4 or 5, characterized in that the titanium dioxide is employed in admixture with aluminum oxide with a particle size $d_{50}$ of less than 5 $\mu$m.

**7.** A process according to claim 6, characterized in that the titanium dioxide is employed in admixture with highly dispersed aluminum oxide with an average particle size of 10 to 50 nm.

**8.** A process according to one or more of the claims 1 to 3, characterized in that the sol is prepared by adding 0.1 to 10% by weight, calculated as $TiO_2$ and based on the sintered product, of aluminum titanate with a particle size $d_{50}$ of less than 5 $\mu$m.

**9.** A process according to claim 8, characterized in that the aluminum titanate is employed in highly dispersed form with an average primary particle size of 10 to 50 nm.

**10.** A process according to one or more of the claims 1 to 9, characterized in that finely ground Boehmit or aluminum hydroxide is used as hydrate of alumina resp. as preliminary stage of $\alpha$-$Al_2O_3$.

**11.** Sintered material on the basis of $\alpha$-aluminum oxide, characterized in that it consists of 90 to 99.9% by weight of $Al_2O_3$ and 0.1 to 10% by weight of TiO2, which is optionally present in the form of aluminum titanate, and in that it has a crystal size of at least 95% of all crystallites of less than 4 $\mu$m.

**12.** Sintered material according to claim 11, characterized in that it consists of 95 to 99.0% by weight of $Al_2O_3$ and 1 to 5% by weight of $TiO_2$, which is optionally present in the form of aluminum titanate.

**13.** Sintered material according to claim 11 or 12, characterized in that it has a micro hardness of at least 18 GPa and a tenacity at break of at least 2 $MPa \cdot m^{\frac{1}{2}}$.

**14.** Sintered material according to claim 11 or 12, characterized in that it has a crystallite size of at least 95% of all crystallites of less than 2 $\mu$m and micropores with a diameter of 10 to 500 nm.

**15.** Sintered material according to claim 14, characterized in that it has a micro hardness of at least 16 GPa and a tenacity at break of at least 4.5 $MPa \cdot m^{\frac{1}{2}}$.

**16.** The use of the sintered material according to claim 11 as loose abrasives.

**17.** The use of the sintered material according to claim 11 for the preparation of bound abrasives, ceramic powders, ceramic structural elements, tools for cutting manipulation or of grinding bodies.

**Revendications**

**1.** Procédé de fabrication de matériaux céramiques frittés à base d'oxyde d'aluminium $\alpha$, qui comporte les étapes de préparation d'un sol, de formation d'un gel, de séchage, éventuellement de broyage et de classement, et de frittage, caractérisé en ce que l'on prépare un sol homogène constitué par 90 à 99,9% en poids, calculés en $Al_2O_3$ et rapportés au produit fritté, d'un hydrate d'alumine et/ou d'au moins un précurseur d'oxyde d'aluminium $\alpha$ avec addition au total de 0,1 à 10% en poids, calculés en $TiO_2$ et rapportés au produit fritté,
a) de dioxyde de titane très finement divisé ou hautement dispersé et/ou
b) de titanate d'aluminium très finement divisé ou hautement dispersé et/ou
c) d'un mélange de dioxyde de titane très finement divisé ou hautement dispersé et d'oxyde d'aluminium très finement divisé ou hautement dispersé et/ou
d) d'au moins un précurseur formant du dioxyde de titane et/ou du titanate d'aluminium
et en ce que l'on réalise le frittage après une phase de préchauffage, entre 300 et 700°C, à une température de 1250 à 1500°C.

**2.** Procédé selon la revendication 1, caractérisé en ce que, après le frittage, le produit est soumis à un traitement subséquent à une température de 800 à 1300°C, mais inférieure d'au moins 20°C à la température de frittage, jusqu'à ce qu'une partie au moins des micropores présents après le frittage ait disparu.

3. Procédé selon la revendication 1 ou 2, caractérisé en ce que le frittage est réalisé à la pression atmosphérique.

4. Procédé selon une ou plusieurs des revendications 1 à 3, caractérisé en ce que le sol est préparé avec addition de 0,1 à 10% en poids, par rapport au produit fritté, de dioxyde de titane d'une taille de particules inférieure à 5 $\mu$m en valeur $d_{50}$.

5. Procédé selon la revendication 4, caractérisé en ce que le dioxyde de titane est utilisé sous forme hautement dispersée avec une taille moyenne de particules primaires de 10 à 50 nm.

6. Procédé selon la revendication 4 ou 5, caractérisé en ce que le dioxyde de titane est utilisé dans le mélange avec de l'oxyde d'aluminium d'une taille de particules inférieure à 5 $\mu$m en valeur $d_{50}$.

7. Procédé selon la revendication 6, caractérisé en ce que le dioxyde de titane est utilisé dans le mélange avec de l'oxyde d'aluminium hautement dispersé d'une taille moyenne de particules primaires de 10 à 50 nm.

8. Procédé selon une ou plusieurs des revendications 1 à 3, caractérisé en ce que le sol est préparé avec addition de 0,1 à 10% en poids, calculés en $TiO_2$ et rapportés au produit fritté, de titanate d'aluminium d'une taille de particules inférieure à 5 $\mu$m en valeur $d_{50}$.

9. Procédé selon la revendication 8, caractérisé en ce que le titanate d'aluminium est utilisé sous forme hautement dispersée avec une taille moyenne de particules primaires de 10 à 50 nm.

10. Procédé selon une ou plusieurs des revendications 1 à 9, caractérisé en ce que l'on utilise corne hydrate d'alumine ou comme précurseur d'$\alpha$-$Al_2O_3$ de la boehmite très finement divisée ou de l'hydroxyde d'aluminium très finement divisé.

11. Matériau fritté à base d'oxyde d'aluminium $\alpha$, caractérisé en ce qu'il consiste en 90 à 99,9% en poids de $Al_2O_3$ et en 0,1 à 10% en poids de $TiO_2$, qui est éventuellement sous forme de titanate d'aluminium, et présente une taille de cristallites d'au moins 95% de tous les cristallites inférieure à 4 $\mu$m.

12. Matériau fritté selon la revendication 11, caractérisé en ce qu'il consiste en 95 à 99,0% en poids de $Al_2O_3$ et en 1 à 5% en poids de $TiO_2$ qui est éventuellement sous forme de titanate d'aluminium.

13. Matériau fritté selon la revendication 11 ou 12, caractérisé par une microdureté d'au moins 18 GPa et une ténacité à la rupture d'au moins 2 MPa.m$^{1/2}$.

14. Matériau fritté selon la revendication 11 ou 12, caractérisé par une taille de cristallites d'au moins 95% de tous les cristallites inférieure à 2 $\mu$m et des micropores d'un diamètre de 10 à 500 nm.

15. Matériau fritté selon la revendication 14, caractérisé par une microdureté d'au moins 16 GPa et une ténacité à la rupture d'au moins 4,5 MPa.m$^{1/2}$.

16. Utilisation du matériau fritté selon la revendication 11 comme abrasif libre.

17. Utilisation du matériau fritté selon la revendication 11 pour la fabrication d'abrasifs liés, de poudres céramiques, de pièces céramiques, d'outils pour l'usinage avec enlèvement de copeaux ou d'éléments broyeurs.

Abb. 1

Abb. 2

Sinterprodukt gemäss
Beispiel 1

Sinterprodukt gemäss
Beispiel 3

1 μm

1 μm

Abb. 3

Sinterprodukt gemäss
Beispiel 10

Abb. 4

Sinterprodukt gemäss
Beispiel 11

1 µm

10 µm

Abb. 5

Sinterprodukt gemäss
Beispiel 12

Abb. 6

Sinterprodukt gemäss
Beispiel 13

1 μm

10 μm

Abb. 7

Sinterprodukt gemäss Beispiel 14

1 μm

Abb. 8
————

├———┤ 1 µm

Abb. 9
————

├—┤ 1 µm

Abb. 10
‒‒‒‒‒‒‒‒

I⌐

Abb. 11
‒‒‒‒‒‒‒‒

I⌐